# EUROPEAN PATENT APPLICATION

(11) **EP 0 855 550 A1**
(43) Date of publication of application: **29.07.1998**
(21) Application number: 98100571.3
(22) Date of filing: 15.01.1998
(51) Int. Cl.: F16N 27/00

(54) **Easily assembled metering valve**

(30) Priority: 22.01.1997 IT MI970115
(71) Applicant: Alex S.p.A., 20129 Milano (IT)
(72) Inventor: Divisi, Walter, Surrey TW20 0HJ (GB)
(74) Representative: Kratter, Carlo, Dr. Ing.

(57) **Abstract**

A metering valve, of the type suitable for connection to a lubrication line, to deliver predefined quantities of lubricant when the lubricant in said line is brought to a determined pressure, comprising: an entry channel (1A) connected to said line, a metering chamber (9) containing said predefined quantity of lubricant and connected at its inlet to said channel (1A) and at its outlet to an exit hole (17A), a piston (6) arranged to move, against an elastic element (7), towards said exit hole (17A) to discharge said predefined quantity of lubricant when the lubricant in said line reaches said predetermined pressure, and to return to a rest position by the action of said elastic element (7) when the pressure in said line falls below said predetermined pressure. To the piston (6) there are connected valve means (14) arranged to enable lubricant to pass from said entry channel (1A) to said chamber (9) only when the lubricant pressure within the line is less than said predetermined pressure.

## Description

This invention relates to metering valve in accordance with the pre-characterising part of the main claim.

Metering valves of the aforesaid type are connected to a single lubrication line downstream of a pump to provide a predefined quantity of lubricant each time the pump is activated, or when the pump raises the line pressure to a predetermined value.

On deactivating the pump the line pressure falls, and the next predefined quantity of lubricant flows into the valve.

Valves of this type have been used for some time to cyclically lubricate the various parts of a machine tool.

Various types of metering valves are known, all however presenting serious drawbacks.

A first type of metering valve comprises a piston shaped in such a manner as not to form a perfect seal against the wall of the cylinder along which it slides, so that the oil is able to fill the metering chamber by seeping past the piston. When the line pressure reaches a predetermined value the piston pushes out the oil contained in the metering chamber through an exit hole, and on reaching its end-of-travel position closes this hole so that the oil which during piston travel seeps by the piston is unable itself to escape.

To enable this type of valve to be used, the lubricant must exert on the piston a force such as to bring it to its end-of-travel position very rapidly, so that only that oil effectively contained in the metering chamber is delivered by the valve, but not that which seeps.

For this reason high-power pumps have to be used to ensure that all those points along the line of the system at which the valves are provided reach the same pressure in a time of less than one second. This drawback discourages the use of such valves in extensive systems or where the pumps are of low power.

Valves of the aforesaid type are also difficult to construct, in which respect the cylinder and piston have to be formed with high precision to ensure a constant oil seepage between the piston and cylinder in all valves.

To overcome the drawbacks of valves of the aforesaid type, a second type of valve has been developed in which a channel is provided for filling the metering chamber, and a seal element separate from the piston closes the entry port to said channel when the piston pushes out of the metering chamber the oil contained in it and, vice versa, to open this port when the piston returns to its rest position. A low pressure is sufficient to move the seal element, as this element does not have to move against a spring as in the case of a piston. However, the valves of this type have a larger number of components than the first type, and an inner chamber of more difficult construction. These valves therefore involve a relatively lengthy construction and assembly time.

Moreover, in all known valves the exit hole of the metering chamber is closed by a non-return valve of the type comprising a ball or similar element, urged against the mouth of this hole by a spring. The non-return valves of this type are relatively time-consuming and difficult to position.

An object of this invention is to provide a metering valve which overcomes the aforesaid drawbacks by comprising a small number of parts of simple construction and easy and rapid assembly, and which can also operate with systems comprising low-power pumps.

A further object is to provide a metering valve having an easily constructed and assembled unidirectional valve for closing the exit hole of the metering chamber.

These and further objects which will be apparent to an expert of the art are attained by a valve in accordance with the characterising part of the main claim.

The invention will be more apparent from the accompanying drawing, which is provided by way of non-limiting example and on which:
Figure 1 is an enlarged schematic sectional view of a valve according to the invention;
Figures 2 and 3 are enlarged schematic views of the valve piston taken at two different angles;
Figure 4 is an enlarged schematic plan view of the valve detail indicated by the arrow A;
Figures 5 and 6 are enlarged sectional schematic views of a second detail, indicated by the arrow B, in two different positions of utilization.

With reference to said figures, a metering valve according to the invention comprises a substantially cylindrical body 1 having a lubricant entry channel 1A connected to a cylindrical chamber 2 closed by an exit part 3 comprising a hole 4, and a conventional connector 5.

The cylindrical chamber 2 houses a piston 6, a spring 7 and a closure element 8 for the metering chamber 9 containing the predefined lubricant quantity to be emitted each time by the valve.

In correspondence with the entry channel 1A, the cylindrical valve body 1 comprises a part 10 shaped conventionally for connection to a lubrication line which itself is connected to a feed pump for the lubricant, which can for example be oil or grease.

Rigidly fixed to its other end there is the exit part 3 comprising along its outer surface a thread 3A for engaging a counter-thread provided in the body 1. The exit part 3A has an annular end 11, the free edge of which is in contact with a unidirectional "cap" valve 12 connected to the closure element 8, as described in detail hereinafter.

The piston 6 comprises a solid, substantially cylindrical first part 13 and an open hollow frusto-conical second part 14. In its outer surface, the cylindrical part 13 comprises a plurality of grooves 15 and, in correspondence with its base 16, a first step 16A acting as a stop for the spring 7, and a second step 16B arranged to close a port 17A of an exit channel 17 provided in a tubular element 18 of the closure element 8.

The outer diameter of the cylindrical part 13 is substantially equal to that of the cylindrical chamber 2, so that the piston can slide within said chamber in contact with its inner wall 2A. The frusto-conical part 14 has an elastic lateral wall 14A able to expand (Figure 5) such as to make contact with, and seal against, the wall 2A of the cylindrical chamber 2 within which the piston 6 slides (Figure 5) when, on operating the pump of the lubrication system, lubricant enters the valve through the channel 1A at a predefined pressure.

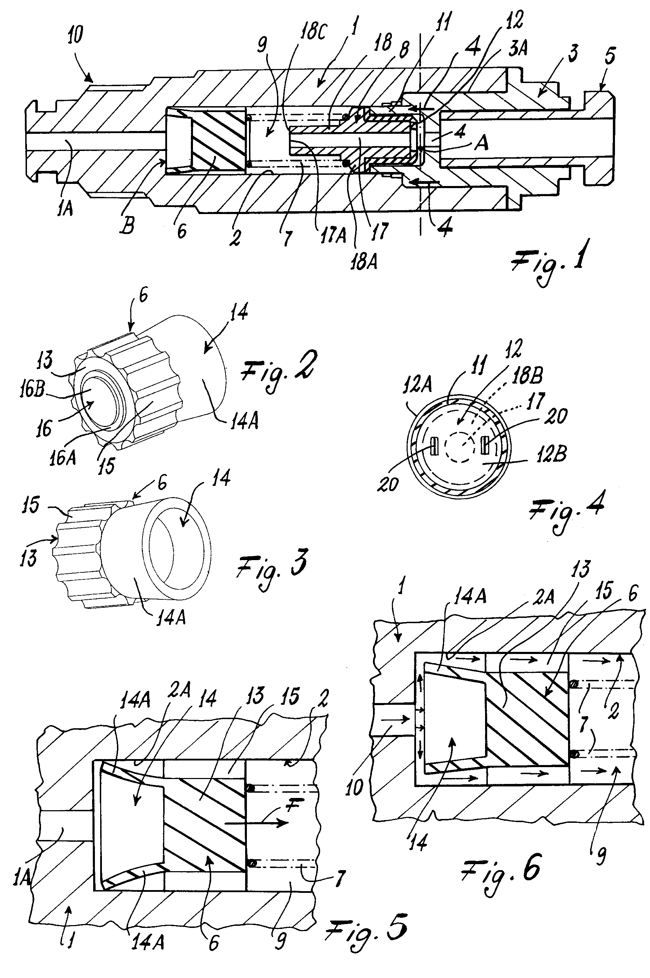

The closure element 8 comprises the tubular element 18 and the unidirectional valve 12; the tubular element 18 presents an annular protuberance 18A acting as a stop for the spring 7 and for the edge 12A (Figure 4) of the valve 12.

One end 18C of the tubular element 18 acts as a limit stop for the piston 6, its other end 18B (Figure 4) acting as-a support for the base 12B (Figure 4) of the valve 12. In correspondence with that part of its base 12B which rests against the end 18B of the tubular element 18, the valve 12 comprises two apertures 20 enabling the lubricant to leave the channel 17 when the lubricant in the chamber 9, under the thrust of the piston 6, reaches a pressure such as to raise the valve base 12 from the end 18B of the tubular element 18. Advantageously, the apertures 20 in the valve 12 are formed by V-shaped notches, the edge 12B being sized to also form a seal between the valve body 1 and the closure element 3.

Both the piston 6 and the unidirectional valve 12 can be formed by moulding any known elastic plastic material suitable for the purpose.

The valve operates in the following manner.

Assuming that the piston is in its rest position, ie that shown in Figures 1 and 6, the lubricant fills the metering chamber 9 by passing through the channel 10 and the grooves 15 in the piston (see the arrows in Figure 6). When the pump of the lubrication system is operated, the pressurized lubricant "inflates" the wall 14A of the piston 6 (Figure 5) while at the same time urging the piston in the direction of the arrow F until the piston base 16B abuts against the end 18C of the tubular element 18. By moving in the direction of the arrow F, the piston 6 urges the lubricant contained in the metering chamber 9 towards the valve exit via the channel 18 and the unidirectional valve 12.

When the pump of the lubrication system is deactivated and the pressure within the system falls, the cup part 14 of the piston "deflates" (Figure 6) to allow another filling of the metering chamber 9, the piston returning to its rest position by the action of the spring.

It should be noted that the particular configuration of the valve components makes the insertion of the components into the valve body and their assembly therein extremely simple and rapid, as is therefore the construction of the valve itself.

To further accelerate and simplify the assembly of the valve of the invention, the piston 6, the spring 7 and preferably also the closure element 8 could advantageously be inserted into a cylindrical capsule having entry and exit holes for the lubricant. This capsule could be assembled separately from the valve body 1 and only subsequently be inserted into the valve body.

As a large selection of metering valves with the number and dimensions of their entry and exit ports variable according to user requirements must be available, encapsulating the main valve components means that one predefined piece identical for all the various valve types can be used, so optimizing production.

To modify the dimensions of the metering chamber 9, it is sufficient to shorten or lengthen the annular end of the closure element 3.

It should also be noted that instead of the unidirectional valve 12, the valve of the invention could comprise a different unidirectional valve of known type.

Finally, the described embodiment is provided by way of example only, numerous modifications being possible, all falling within the same inventive concept, for example the piston 6 could be formed in two separate parts 3, 4 connected together, or the spring 7 could be replaced by other known elastic means.

## Claims

1. A metering valve, of the type suitable for connection to a lubrication line, to deliver predefined quantities of lubricant when the lubricant in said line is brought to a determined pressure, comprising: an entry channel (1A) connected to said line, a metering chamber (9) containing said predefined quantity of lubricant and connected at its inlet to said channel (1A) and at its outlet to an exit hole (17A), a piston (6) arranged to move, against an elastic element (7), towards said exit hole (17A) to discharge said predefined quantity of lubricant when the lubricant in said line reaches said predetermined pressure, and to return to a rest position by the action of said elastic element (7) when the pressure in said line falls below said predetermined pressure; characterised in that to the piston (6) there are connected valve means (14) arranged to enable lubricant to pass from said entry channel (1A) to said chamber (9) only when the lubricant pressure within the line is less than said predetermined pressure.

2. A valve as claimed in claim 1, characterised in that the valve means (14) connected to the piston (6) are "cup" shaped, the concave part of said "cup" facing the entry channel (1A), the lateral wall of said cup being elastically deformable by the action of the lubricant when this reaches the predefined pressure, said wall deforming to sealedly adhere, at least partially, to the wall (2A) of a cylinder (2) within which the piston (6) slides, whereas when in its undeformed state it enables the lubricant to flow towards the metering chamber (9).

3. A valve as claimed in claim 2, characterised in that the valve means (14) are of hollow frusto-conical shape.

4. A valve as claimed in claim 1, characterised in that the valve means (14) are formed integrally with the piston (6).

5. A valve as claimed in claim 1, characterised in that the piston (6), in correspondence with its outer wall, comprises at least one passage (15) enabling the lubricant to flow from the entry channel (1A) to the metering chamber (9).

6. A valve as claimed in claim 5, characterised in that the outer wall of the piston (6) comprises a plurality of longitudinal grooves (13) uniformly spaced apart.

7. A valve as claimed in claim 1, characterised by comprising, for the metering chamber (9), a closure element (8) comprising a tubular element (18) having an exit channel (17A) and a unidirectional valve (12) of "cap" type mounted on an end (18B) of said tubular element and formed of a material which is at least partially deformable by the action of the lubricant when thrust outwards by the piston (6).

8. A valve as claimed in claim 7, characterised in that the unidirectional valve (12) comprises, in correspondence with that portion of its base (12B) resting against the end (18B) of the tubular element (18), at least one aperture (20) normally closed by said end (18B).

9. A valve as claimed in claim 7, characterised by comprising, in correspondence with the outlet of the metering chamber (9), a unidirectional valve (12) one edge (12A) of which is arranged to also act as a seal element between said chamber (9) and a closure element (3) for said valve.

10. A valve as claimed in claim 1, characterised in that at least the piston (6), the valve means (14) and the elastic element are inserted into a capsule able to be inserted into a seat provided in the valve, said capsule having an entry hole and an exit hole for the lubricant.

11. A valve as claimed in claim 10, characterised in that the capsule also comprises a unidirectional valve (12) provided in correspondence with an exit hole of the capsule.
